# EUROPEAN PATENT SPECIFICATION

(11) **EP 0 583 064 B1**
(45) Date of publication and mention of the grant of the patent: **19.05.1999**
(21) Application number: 93305359.7
(22) Date of filing: 08.07.1993
(51) Int. Cl.: H04Q 7/14, H04Q 7/32

(54) **Radio paging receiver with display unit**
Funkrufempfänger mit Anzeigeeinheit
Récepteur d'appel radio avec unité d'affichage

(30) Priority: 09.07.1992 JP 182387/92; 23.10.1992 JP 285669/92
(43) Date of publication of application: 16.02.1994
(73) Proprietor: NEC CORPORATION, Tokyo (JP)
(72) Inventor: Kudoh, Kazuhiro, Minato-ku, Tokyo (JP)
(74) Representative: Moir, Michael Christopher

(56) References cited:
- WO-A-86/03318
- WO-A-86/04476
- WO-A-90/13213
- WO-A-90/15511
- US-A- 5 173 688
- PATENT ABSTRACTS OF JAPAN vol. 013, no. 195 (E-754)10 May 1989 & JP-A-1 016 132 ( SHARP CORP. ) 19 January 1989

## Description

### BACKGROUND OF THE INVENTION

### 1. FIELD OF THE INVENTION

The present invention relates to a radio paging receiver with a display unit and, more particularly, to a radio paging receiver with a display unit which can effectively use a limited memory area.

### 2. DESCRIPTION OF THE PRIOR ART

In a conventional radio paging receiver with a display unit, a received message is stored in a memory and can be displayed upon reception. In this case, if an identical message is received, the message is not stored in the memory. Otherwise, every time a new message is received, a message display operation as a notifying operation is performed, and the message is stored in the memory.

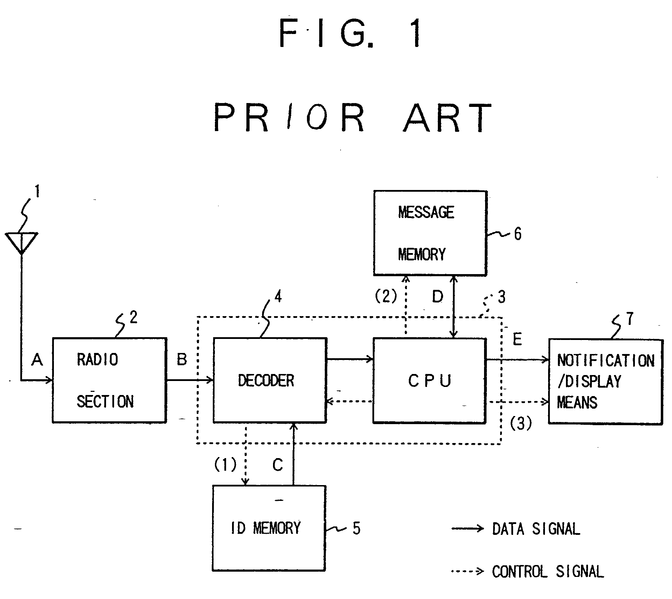

Fig. 1 is a block diagram showing an arrangement of a conventional radio paging receiver with a display unit.

Referring to Fig. 1, a radio signal received through an antenna 1 is amplified and demodulated by a radio section 2 and is input, as a digital signal B, to a decoder 4. The decoder 4 collates an address contained in this digital signal, i.e., a paging number, with a self-address C stored in an ID memory 5. If they coincide with each other, a CPU stores a message code D accompanying the address code in a message memory 6, and outputs a control signal (3) for controlling a notification/display means 7 to perform a notification and display a message E. Reading of the self-address C from the ID memory 5 is performed by using a control signal (1) from the decoder 4 and reading/writing of the message D from/in the message memory 6 is performed by using a control signal (2) from the CPU. If the received message is stored in the message memory 6, the message D or E stored in the message memory 6 can be displayed by the notification/display means 7 using control signals (2) and (3) from the CPU. A control section 3 consists of the decoder 4 and the CPU.

In the conventional radio paging receiver with a display unit, however, if a large number of similar messages and messages whose contents change with time in association with specific items are received, a large number of unnecessary messages, confusing messages, and messages expressing the current states of specific contents are stored. Consequently, a cumbersome operation is required to select a useful message, and a limited message memory area cannot be effectively used, resulting in a large increase in transmission amount.

WO 86/04476 describes a radio pager, a transmission for which includes "label", "address" and "message" signals. The pager stores the label and message signals in buffers; if the appropriate address is detected by a comparator the stored label signal is compared with previously received label signals. If the label has yet to be received, the label and message are stored in a label memory and a message memory respectively. If the label has been previously received, the message stored in the message memory may be updated.

WO86/03318 describes a radio receiver adapted to receive a message, a portion of which comprises an identity code of the message. If an identity code of a newly-received message has already been received and stored by the receiver, the newly-received message will not be stored in the receiver.

### SUMMARY OF THE INVENTION

It is an object of the present invention to provide a radio paging receiver with a display unit, in which only one latest message associated with an item defined by a specific character and symbol train, i.e., a specific item, is always stored, and old messages with little necessity and confusing messages are automatically removed when a large number of similar messages and messages whose contents change with time in association with specific items are received, whereby selection of a useful message is facilitated in a message display operation, and the limited message memory can be effectively used.

Accordingly, the present invention provides a radio paging receiver with a display unit, the receiver comprising storage/display means and update means, characterised in that said receiver is adapted to receive a signal comprising a paging number corresponding to an information field to be received by the receiver, a specific portion of a message contained in said signal corresponding to an individual information item, in the information field, which is to be received, and a remaining portion of the message corresponding to information associated with the information item, the receiver further comprising input means for selecting an individual information item to be received, the storage/display means being adapted to store and display an individual information item selected by said input means and information associated with the information item, and the update means being adapted to update automatically said storage/display means upon reception of a new message only when the specific portion of the message corresponds to the selected individual information item stored in said storage/display means, and information associated with the information item changes with respect to that stored in said storage/display means.

In a preferred embodiment, a radio paging receiver with a display unit comprises a first memory for storing a specific character and symbol train, a second memory for storing a received message, message collating means for determining whether the specific character and symbol train is contained in the received message, second memory control means for controlling storage of the received message in the second memory on the basis of the determination result obtained by the message collating means.

Preferably, when the message collating means determines that a first message containing the specific character and symbol train has already been stored in the second memory, and the specific character and symbol train is also contained in a newly received second message, the second memory control means erases the first message and causes the second memory to newly store the second message.

The receiver may further comprise input means for selecting an individual information item to be received, storage/display means for storing and displaying the individual information item selected by the input means and information associated with the information item, and update means for updating the storage/display means upon reception of a new message only when a specific portion of the message corresponds to the selected individual information item, and contents of information associated with the information item change, wherein a paging number corresponds to an information field to be received, a specific portion of a message corresponds to an individual information item, in the information field, which is to be received, and a remaining portion of the message corresponds to information associated with the information item.

The receiver may further comprise input means for, when the individual information item to be received is selected, further selecting an important individual information item, and notifying means for performing a special notification when contents of information associated with the selected important individual information item change.

According to the radio paging receiver with a display unit of the present invention, it is checked whether a specific character and symbol train is contained in a received message. If it is determined that a first message containing the specific character and symbol train has already been stored in the second memory, and the specific character and symbol train is also contained in a newly received second message, the first message is erased, and the second message is stored in the second memory. With this operation, when a new message associated with an item defined by a specific character and symbol train, i.e., a specific item, is received, an old message stored in the message memory is erased, and one latest message can be stored. Therefore, only one latest message associated with an item defined by a specific character and symbol train, i.e., a specific item, is always stored, and old messages with little necessity and confusing messages are automatically removed when a large number of similar messages and messages whose contents change with time in association with specific items are received, whereby selection of a useful message is facilitated in a message display operation, and the limited message memory area can be effectively used.

In addition, according to the present invention, in the radio paging receiver with a display unit, an individual information item to be received is selected, and the selected individual information item and information associated therewith are stored and displayed. The stored contents are replaced with a newly received message only when a specific portion of the received message corresponds to selected information item, and the contents of information associated with the information item change. After an individual information item to be received is selected, an important individual information item is further selected. If the- contents of information associated with the selected important individual information item change, a special notification is performed. With this operation, when a large number of messages whose contents change with time with respect to specific items are received, messages indicating the current states of specific contents can be efficiently received. A large number of old messages with little necessity and confusing messages are not stored, and a cumbersome operation of selecting a useful message need not be performed. Therefore, a limited message memory area can be effectively used, and information which are required to be obtained in real time can be effectively ensured.

The above and many other advantages, features and additional objects of the present invention will become manifest to those versed in the art upon making reference to the following detailed description and accompanying drawingsin which preferred structural embodiments incorporating the principles of the present invention are shown by way of illustrative example.

### BRIEF DESCRIPTION OF THE DRAWINGS

Fig. 1 is a block diagram showing the arrangement of a conventional radio paging receiver with a display unit;
Fig. 2 is a block diagram showing the arrangement of an embodiment of the present invention;
Fig. 3 is a flow chart associated with an operation of the embodiment shown in Fig. 2;
Figs. 4A and 4B illustrate display samples in the embodiment shown in Fig. 2;
Fig. 5 is a block diagram showing the arrangement of another embodiment of the present invention;
Fig. 6 is a flow chart associated with an operation of the embodiment shown in Fig. 5; and
Figs. 7A and 7B illustrate display samples in the embodiment shown in Fig. 5.

### DETAILED DESCRIPTION OF THE PREFERRED EMBODIMENTS

The present invention will be described in more detail below in association with the preferred embodiments shown in the accompanying drawings.

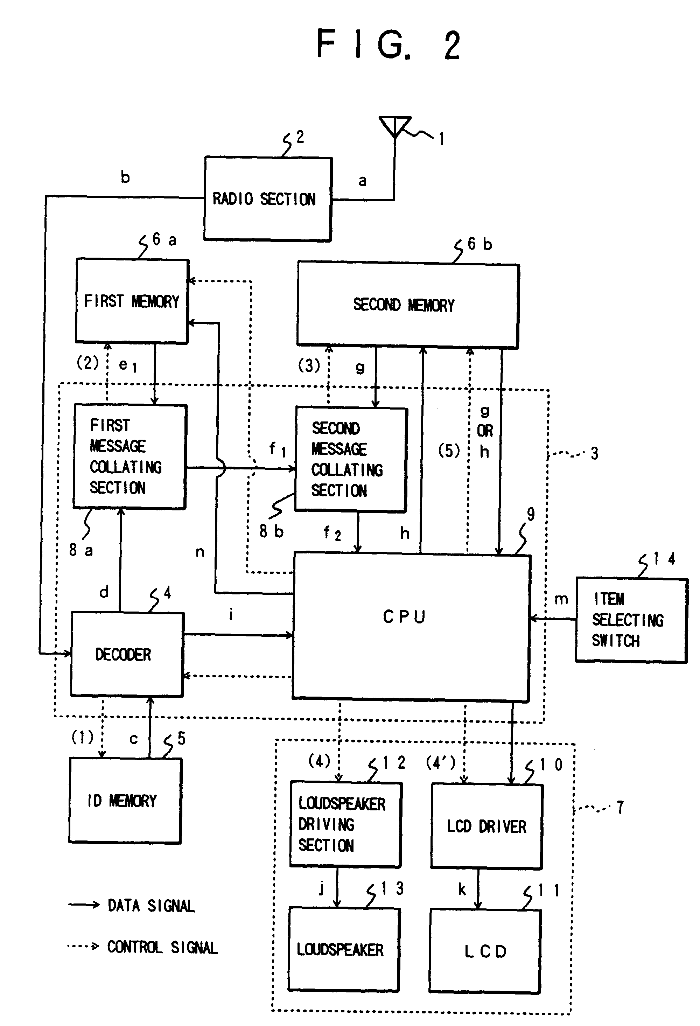

The embodiment shown in Fig. 2 comprises an antenna 1, a radio section 2 for demodulating a received input signal a to output a digital signal b as a paging number, a decoder 4 for receiving and decoding the output signal b from the radio section 2, an ID memory 5 for storing a self-address, a first memory 6a for storing both a preset individual information item and information indicating whether the individual information item is selected as a desired reception item by a carrier of the receiver, a first message collating section 8a for collating a message code output from the decoder 4 with the individual information item in the first memory 6a, a CPU 9, a second memory 6b for storing detailed information associated with a selected individual information item sent through a message, and a second message collating section 8b for receiving the information associated with-the selected individual information item from the first message collating section 8a, collating the information with the stored contents of the second memory 6b to check a change in information contents, and sending the resultant data to the CPU 9. The embodiment also comprises an LCD driver 10, an LCD 11, a loudspeaker driving section 12, and a loudspeaker 13, which are included in a notification/display means 7, and an item selecting switch 14 for setting an individual information item. As is apparent from Fig. 2, a control section 3 is constituted by the first and second message collating sections 8a and 8b, the decoder 4, and the CPU 9.

Of these components, the item selecting switch 14 and its cooperative components such as the CPU 9, the LCD driver 10, the LCD11, the first memory 6a constitute an input means; the second memory 6b, the CPU 9, the LCD driver 10, and the LCD 11 constitute a storage/display means; the first and second message collating sections 8a and 8b, and the second memory 6b constitute an update means; and the first and second memories 6a and 6b, the first and second message collating sections 8a and 8b, the CPU 9, the LCD driver 10, the LCD 11, the loudspeaker driving section 12, and the loudspeaker 13 also serve as a notification means.

An operation of the embodiment will be described next.

The radio signal a received by the antenna 1 is amplified and demodulated by the radio section 2 and is input, as the digital signal b, to the decoder 4.

The decoder 4 collates an address contained in the digital signal b, i.e., the paging number, with a self-address c stored in the ID memory 5. When they coincide with each other, the decoder 4 outputs a message code d accompanying the address code to the first message collating section 8a. In this case, the self-address c is read out from the ID memory 5 under the control (1) of the decoder 4. The self-address used in this case corresponds to the field of information sent through a message, e.g., "PARKING-LOT INFORMATION" or "AIRLINE TICKET VACANCY STATE" rather than an address unique to the radio paging receiver with a display unit (to be referred to as the receiver hereinafter).

The first memory 6a serves to store a character and symbol train transmitted as a specific portion of a message corresponding to an individual information item preset with respect to such an address, which item is, for example, "YOKOHAMA STATION HIGASHIGUCHI DAIICHI" or "YOKOHAMA STATION NISHIGUCHI CHIKA" for "PARKING-LOT INFORMATION". The first memory 6a also stores information indicating whether such an individual information item is selected, as an item to be received, by the carrier of the receiver.

When the message code d is input to the first message collating section 8a, a selected individual information item e₁ stored in the first memory 6a is referred to (control (2)), and a specific portion of the message is collated with the selected individual item to check whether they correspond to each other. A collation result f₁ is output to the second message collating section 8b.

Information g transmitted through the message and associated with the selected individual information item e₁ is stored in the second memory 6b. Upon reception of the collation result f₁ from the first message collating section 8a, the second message collating section 8b compares the information portion, of the received message, which is associated with the individual information item with the current information g by referring to the second memory 6b (control (3)) so as to check whether the contents of the information have changed. The second message collating section 8b outputs the resultant data to the CPU 9.

Upon reception of an output f₂ from the second message collating section 8b, which output indicates that new information associated with the individual information item is received, the CPU 9 receives a received message i from the decoder 4 and performs loudspeaker control (4) of the loudspeaker driving section 12 to cause the loudspeaker 13 to generate a notifying sound j. In addition, the CPU 9 performs driver control (4') of the LCD (Liquid Crystal Display) driver 10 to cause the LCD 11 to display a message k, and writes new information h in the second memory 6b to update the corresponding information.

As is apparent, the information g or h stored in the second memory 6b can be read out by the CPU 9 (control (5)) and can be displayed on the LCD 11 upon driver control (4') of the LCD driver 10.

In order to set each individual information item, the CPU 9 writes selected information n associated with each individual information item in the first memory 6a in response to a signal m input to the item selecting switch 14.

When an individual information item is selected using the item selecting switch 14, the selecting operation can be easily performed while displaying items of selection on the LCD 11.

When an item of special interest is selected by operating the item selecting switch 14 from those similarly selected by the operation of the item selecting switch 14, the selected information is written in the first memory 6a by the CPU 9. When it is detected that new information associated with the item is received, the CPU 9 controls the loudspeaker driving section 12 to generate a special notifying sound m from the loudspeaker 13. For example, the special notifying sound may be a sound whose volume, frequency, tone, or the like is different from that of a normal notifying sound. Alternatively, in such a case, a notifying sound may be generated even in a situation wherein no notifying sound is generated upon reception of a normal item.

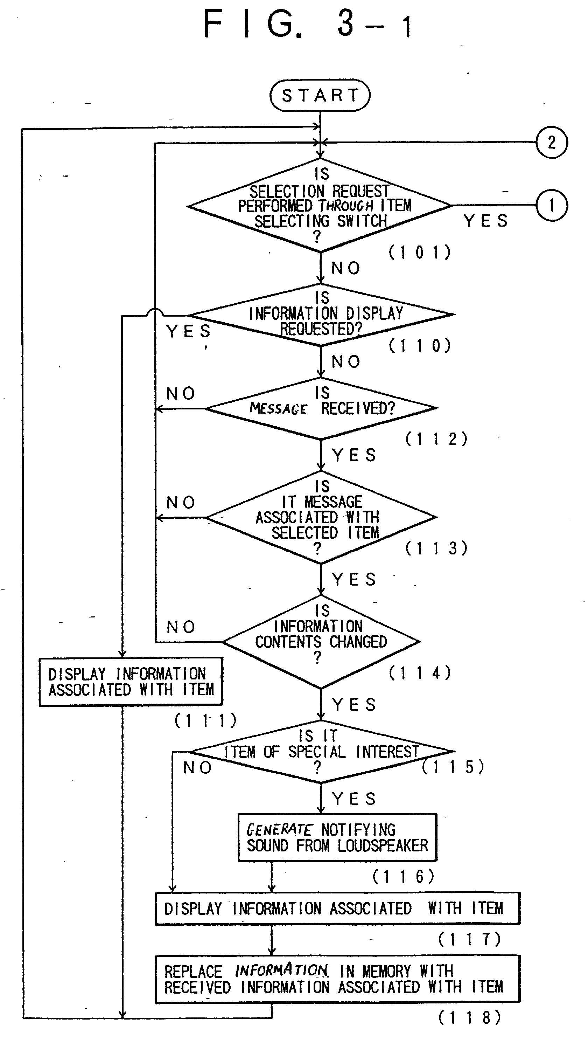

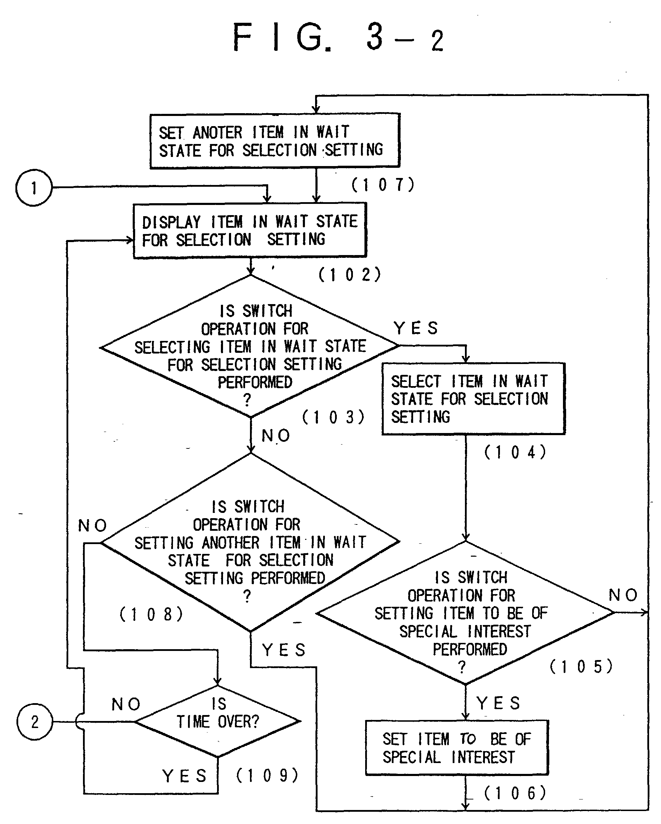

Fig. 3 is a flow chart for explaining an operation of the embodiment.

An individual information item at each address is selected by operating the item selecting switch 14 (step 101).

When an item selection mode is set, an item in a wait state for selection setting is displayed (step 102). When a switch operation for selection setting is performed (step 103), the item in the wait state for selection setting is selected (step 104).

When the item is selected, whether to set the item as an item of special interest (step 106) is determined by a switch operation (step 105), and another item is set in a wait state for selection setting (step 107).

When a switch operation is performed to set another item in a wait state for selection setting while the wait state for selection setting is displayed (steps 102 and 103), another item is set in a wait state for selection setting (step 108). When, however, a predetermined period of time elapses without operating the item selecting switch 14 (109), the item selection mode is terminated.

When a switch operation is performed to display information (step 110), information associated with each item is displayed (step 111). When a message is received (step 112), a specific portion of the message is collated with the selected item to check whether the message corresponds to the selected item (step 113). A change in the information is then checked by collating it with the latest information stored in the second memory 6b (step 114). When there is a change in the information associated with the selected item, it is checked whether the item is of special interest (step 115). When the item is of special interest, a notifying sound is generated by the loudspeaker 13 (step 116). In addition, the information associated with the item is displayed (step 117), and the received information associated with the item is written in the second memory 6b to update the corresponding information (step 118). When the item is not of a special interest (step 115), only display of the information (step 117) and updating of the information (step 118) are performed.

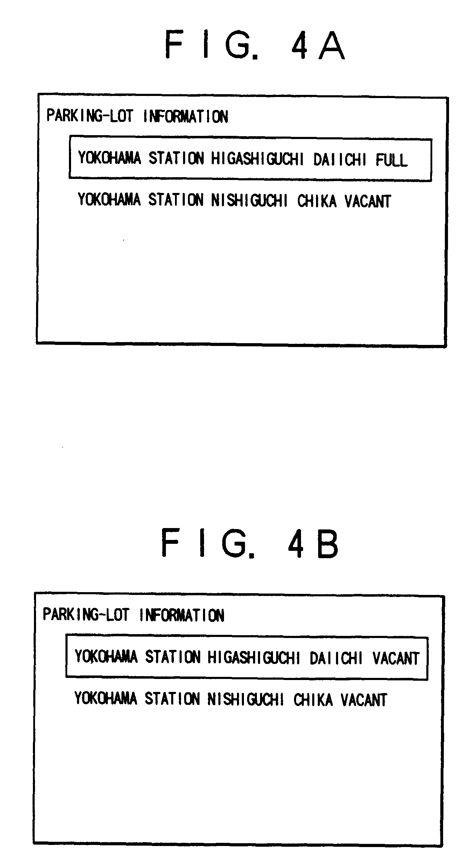

Figs. 4A and 4B illustrate message display samples in the embodiment. Fig. 4A shows a display of information associated with each item. More specifically, "PARKING-LOT INFORMATION" is an information field corresponding to an address, and "YOKOHAMA STATION HIGASHIGUCHI DAIICHI" and "YOKOHAMA STATION NISHIGUCHI CHIKA" are individual information items. Two pieces of latest information "FULL" and "VACANT" are displayed on the right side of the respective items.

The frame enclosing "YOKOHAMA STATION HIGASHIGUCHI DAIICHI" indicates that the item is of special interest.

Fig. 4B shows a message display in a case wherein a new message associated with the item "YOKOHAMA STATION HIGASHIGUCHI DAIICHI" is received.

When a large number of messages which change with time are received in association with special items, useful messages are automatically selected in this manner, allowing effective use of a limited memory area and efficient acquisition of necessary information.

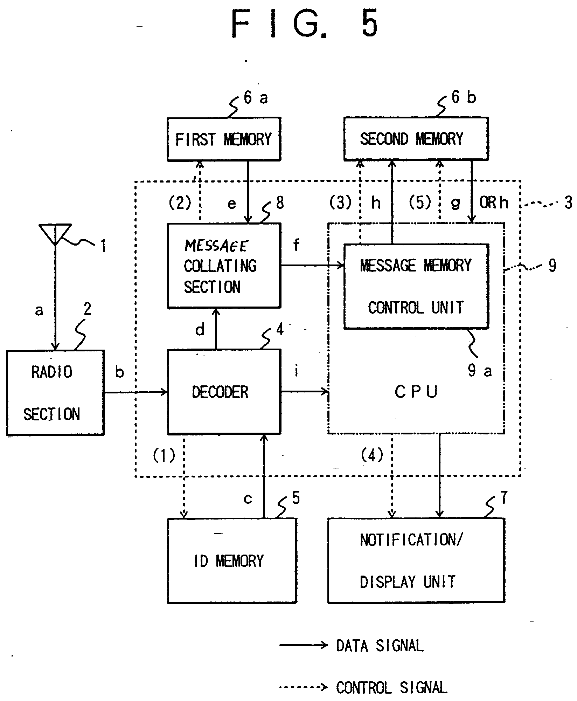

Another embodiment of the present invention will be described below with reference to Figs. 5 to 7B.

Fig. 5 is a block diagram showing the arrangement of the second embodiment. The components denoted by the same reference numerals and symbols as those in Fig. 2 have the same functions as those of the corresponding components. Therefore, a repetitive description of these components will be avoided.

Fig. 5 shows the minimum necessary arrangement. This arrangement is different from the arrangement of the first embodiment shown in Fig. 2 in that a message memory control unit 9a is included in a CPU 9 in place of the second message collating section 8b.

An operation of the second embodiment will be described below.

A received message h is stored in a second memory 6b in the following manner. First, a message collating section 8 checks upon collation whether a message code d output from a decoder 4 contains a character and symbol train identical to a specific character and symbol train e read out (control (2)) from a first memory 6a for storing a character and symbol train. The message collating section 8 then outputs a collation result f and the message h to the message memory control unit 9a. If the collation result indicates that the special character and symbol train is not contained, the message memory control unit 9a performs control (3) through a CPU 9 to store the received message h in the second memory 6b. In contrast to this, if the collation result indicates that the special character and symbol train is contained, the message memory control unit 9a erases a message containing the same character and symbol train and stored in the second memory 6b, and causes the second memory 6b to store the newly received message h.

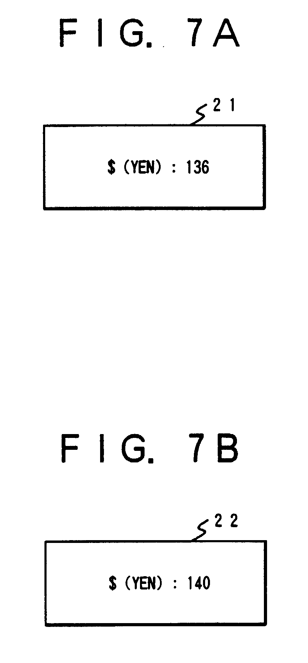

Figs. 7A and 7B illustrate messages displayed by the radio paging receiver shown in Fig. 5. Fig. 7A shows a case wherein a message stored in the second memory 6b is displayed until a new message is received. Assume that a new message "$ (YEN): 140" is received in this state. In this case, in the receiver shown in Fig. 5, it is considered that a new message containing the selected individual information item "$ (YEN):" is received. Therefore, a message 21 shown in Fig. 7A is erased, and a message 22 shown in Fig. 7B is stored.

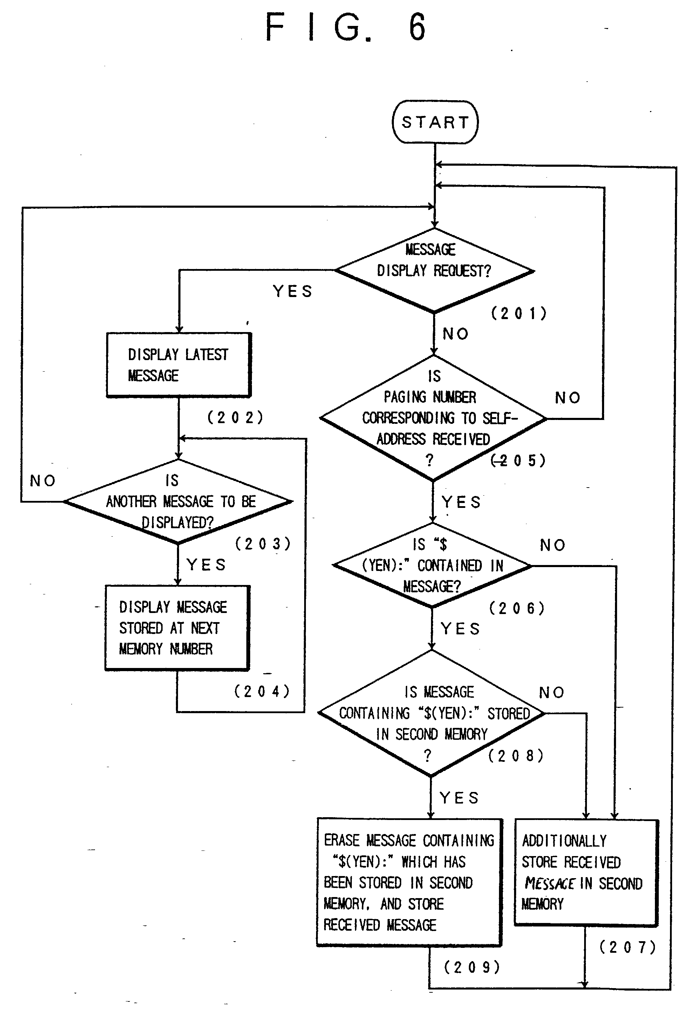

Fig. 6 is a flow chart showing an operation of the radio paging receiver with a display unit in Fig. 5. When a stored message is to be displayed (step 201), the latest message is displayed (step 202). When messages other than the latest message are to be displayed (step 203), the messages are sequentially displayed, from a message at the next memory number indicating a message storage location assigned to the second memory 6b (step 204).

When a paging number corresponding to a self-address is received (step 205), it is checked upon collation whether a character and symbol train identical to a specific character and symbol train pre-stored in the first memory 6a is contained in the received message (step 206). In this case, the specific character and symbol train is "$ (YEN):". If "$ (YEN):" is not contained in the received message, the new message is simply stored in the second memory 6b (step 207). If, however, "$ (YEN):" is contained in the received message, it is further checked whether a message containing "$ (YEN):" is stored in the second memory 6b (step 208). If a message containing "$ (YEN):" is stored, the message is erased, and the received message is stored in the second memory 6b instead (step 209). As is apparent, if a message containing "$ (YEN):" is not stored in the second memory 6b, the received message is simply stored in the second memory 6b (step 207).

It should be understood that the foregoing relates to only preferred embodiments of the present invention, and the present invention is not limited to these embodiments. It will be obvious to those skilled in the art that various modifications and changes can be made within the scope of the invention as defined by the appended claims.

## Claims

1. A radio paging receiver with a display unit, the receiver comprising storage/display means (6b, 7, 9) and update means (6b, 8a, 8b, 9), characterised in that said receiver is adapted to receive a signal comprising a paging number corresponding to an information field to be received by the receiver, a specific portion of a message contained in said signal corresponding to an individual information item, in the information field, which is to be received, and a remaining portion of the message corresponding to information associated with the information item, the receiver further comprising:
input means (6a, 7, 9, 14) for selecting an individual information item to be received;
the storage/display means (6b, 7, 9) being adapted to store and display an individual information item selected by said input means and information associated with the information item; and
the update means (6b, 8a, 8b, 9) being adapted to update automatically said storage/display means upon reception of a new message only when the specific portion of the message corresponds to the selected individual information item stored in said storage/display means, and information associated with the information item changes with respect to that stored in said storage/display means.

2. A receiver according to Claim 1, wherein said input means is adapted to further select an important individual information item, and said receiver further comprises notifying means (7) for performing a special notification when contents of the information associated with the selected individual information item change.

3. A receiver according to Claim 1, wherein said input means includes a first memory (6a) for storing a special character and symbol train, a CPU (9) for controlling said first memory, and a notification/display unit (7) controlled by said CPU; said storage/display means includes a second memory (6b) for storing the received message, said notification/display unit (7) and said CPU (9) for controlling said second memory (6b) and said notification/display unit (7); and said update means includes a message collating unit (8a), a message memory control unit (9) and said second memory (6b).

4. A receiver according to Claim 3, wherein upon determination by said message collating unit (8b) that a first message containing the specific character and symbol train has already been stored in said second memory (6b) and the specific character and symbol train is contained in a newly received second message, said message memory control unit (9) is adapted to erase the first message and cause said second memory (6b) to store the second message.

5. A receiver according to Claim 1, wherein said input means includes an item selecting switch (14) for setting the individual information item, a first memory (6a) for storing both a preset individual information item and information indicating whether the information item is selected as a desired reception item by a carrier of said receiver, a notification/display unit (7) and a CPU (9) for controlling said first memory and said notification/display unit; said storage/display means includes a second memory (6b) for storing information transmitted in a message and associated with a selected individual information item, said notification/display unit (7), and said CPU (9) for controlling said second memory and said notification/display unit; and said update means includes a first message collating section (8a), a second message collating section (8b) for receiving information associated with the selected individual information item from said first message collating section, collating the information with stored contents of said second memory to determine the presence/absence of a change in information contents, and outputting the determination result to said CPU (9), and said second memory (6b).

## Patentansprüche

1. Funkrufempfänger mit einer Anzeigeeinheit, welcher Empfänger Speicher/Anzeigemittel (6b,7,9) und Aktualisierungsmittel (6b,8a,8b,9) aufweist, dadurch gekennzeichnet, daß der Empfänger dazu ausgebildet ist, ein Signal zu empfangen, das eine Rufnummer, die einem Informationsfeld entspricht, das durch den Empfänger empfangen werden soll, einen besonderen Teil einer Nachricht, der in dem Signal enthalten ist und der im Informationsfeld, das empfangen werden soll, einem individuellen Informationsgegenstand entspricht, und einen verbleibenden Teil der Nachricht aufweist, der Information entspricht, die mit dem Informationsgegenstand verknüpft ist, welcher Empfänger weiter aufweist:
Eingabemittel (6a,7,9,14) zum Auswählen eines individuellen Informationsgegenstandes, der empfangen werden soll;
wobei die Speicher/Anzeigemittel (6b,7,9) dazu ausgebildet sind, einen individuellen Informationsgegenstand, der durch die Eingabemittel ausgewählt ist, und mit dem Informationsgegenstand verknüpfte Informationen zu speichern und anzuzeigen; und
wobei die Aktualisierungsmittel (6b,8a,8b,9) dazu ausgebildet sind, automatisch die Speicher/Anzeigemittel bei Empfang einer neuen Nachricht nur dann zu aktualisieren, wenn der besondere Teil der Nachricht dem ausgewählten individuellen Informationsgegenstand entspricht, der in den Speicher/Anzeigemitteln gespeichert ist, und sich Information, die mit dem Informationsgegenstand verknüpft ist, in Bezug auf diejenige ändert, die in den Speicher/Anzeigemitteln gespeichert ist.

2. Empfänger nach Anspruch 1, bei dem die Eingabemittel dazu ausgebildet sind, weiter einen wichtigen individuellen Informationsgegenstand auszuwählen und der Empfänger weiter Meldemittel (7) zum Ausführen einer besonderen Meldung aufweist, wenn sich der Inhalt der Information, die mit dem ausgewählten individuellen Informationsgegenstand verknüpft ist, ändert.

3. Empfänger nach Anspruch 1, bei dem die Eingabemittel einen ersten Speicher (6a) zum Speichern einer besonderen Zeichen- und Symbolkette, eine CPU (Prozessor) (9) zum Steuern des ersten Speichers und eine Melde/Anzeigeeinheit (7) einschließen, die durch die CPU gesteuert wird; wobei die Speicher/Anzeigemittel einen zweiten Speicher (6b) zum Speichern der empfangenen Nachricht, die Melde/Anzeige-einheit (7) und die CPU (9) zum Steuern des zweiten Speichers (6b) und der Melde/Anzeigeeinheit (7) aufweisen; und die Aktualisierungsmittel eine Nachrichtenvergleichs-einheit (8a), eine Nachrichtenspeichersteuereinheit (9) und den zweiten Speicher (6b) aufweisen.

4. Empfänger nach Anspruch 3, bei dem bei Peststellung durch die Nachrichtenvergleichseinheit (8b), daß eine erste Nachricht, die die besondere Zeichen- und Symbolkette enthält, bereits in dem zweiten Speicher (6b) enthalten ist und die besondere Zeichen- und Symbolkette in einer neu empfangenden zweiten Nachricht enthalten ist, die Nachrichtenspeichereinheit (9) dazu ausgebildet ist, die erste Nachricht zu löschen und zu bewirken, daß der zweite Speicher (6b) die zweite Nachricht speichert.

5. Empfänger nach Anspruch 1, bei dem die Eingabemittel einen Gegenstandauswählschalter (14) zum Einstellen des individuellen Informationsgegenstandes, einen ersten Speicher (6a) zum Speichern sowohl einen voreingestellten individuellen Informationsgegenstandes und von Information, um anzuzeigen, ob der Informationsgegenstand als ein gewünschter Empfangs gegenstand durch einen Träger des Empfängers ausgewählt ist, eine Melde/Anzeigeeinheit (7) und eine CPU (9) zum Steuern des ersten Speichers und der Melde/Anzeigeeinheit einschließt, wobei die Speicher/Anzeigemittel einen zweiten Speicher (6b) zum Speichern von Information, die in einer Nachricht übertragen wurde und mit dem ausgewählten individuellen Informationsgegenstand verknüpft ist, die Melde/Anzeigeeinheit (7) und die CPU (9) zum Steuern des zweiten Speichers und der Melde/Anzeigeeinheit aufweist; und wobei die Aktualisierungsmittel einen ersten Nachrichtenvergleichsabschnitt (8a), einen zweiten Nachrichtenvergleichsabschnitt (8b) aufweisen, um Information, die mit dem ausgewählten individuellen Informationsgegenstand verknüpft ist, vom ersten Nachrichtervergleichsabschnitt zu empfangen, um die Information mit gespeichertem Inhalt von dem zweiten Speicher zu vergleichen, um die Anwesenheit/Abwesenheit einer Änderung im Informationsinhalt zu bestimmen und zum Ausgeben des Bestimmungsergebnisses zu der CPU (9) und zu dem zweiten Speicher (6b).

## Revendications

1. Récepteur d'appel radio pourvu d'une unité d'affichage, le récepteur comprenant des moyens de mémorisation/d'affichage (6b, 7, 9) et des moyens d'actualisation (6b, 8a, 8b, 9), caractérisé en ce que ledit récepteur est conçu pour recevoir un signal comprenant un numéro d'appel correspondant à un champ d'informations devant être reçu par le récepteur, une partie spécifique d'un message contenu dans ledit signal et correspondant à un item individuel d'informations, dans le champ d'informations, devant être reçu, et une partie restante du message correspondant aux informations associées à l'item d'informations, le récepteur comprenant, en outre :
des moyens d'entrée (6a, 7, 9, 14) destinés à sélectionner un item individuel d'informations devant être reçu ;
des moyens de mémorisation/d'affichage (6b, 7, 9) étant conçus pour mémoriser et afficher un item individuel d'informations sélectionné par lesdits moyens d'entrée ainsi que les informations associées à l'item d'informations ; et
les moyens d'actualisation (6b, 8a, 8b, 9) étant conçus pour actualiser automatiquement lesdits moyens de mémorisation/d'affichage lors de la réception d'un nouveau message uniquement lorsque la partie spécifique du message correspond à l'item individuel d'informations sélectionné ayant été mémorisé dans lesdits moyens de mémorisation/d'affichage et que les informations associées à l'item d'informations varient par rapport à celles mémorisées dans lesdits moyens de mémorisation/d'affichage.

2. Récepteur selon la revendication 1, dans lequel lesdits moyens d'entrée sont conçus pour sélectionner, en outre, un important item individuel d'informations, et ledit récepteur comprend, en outre, des moyens de notification (7) destinés à délivrer une notification spéciale lorsque le contenu des informations associées à l'item individuel d'informations sélectionné varie.

3. Récepteur selon la revendication 1, dans lequel lesdits moyens d'entrée incluent une première mémoire (6a) destinée à mémoriser un train de caractères et de symboles spécial, une CPU (9) destinée à commander ladite première mémoire, et une unité de notification/d'affichage (7) commandée par ladite CPU ; lesdits moyens de mémorisation/d'affichage incluent une seconde mémoire (6b) destinée à mémoriser le message reçu, ladite unité de notification/d'affichage (7) et ladite CPU (9) destinée à commander ladite seconde mémoire (6b) et ladite unité de notification/d'affichage (7) ; et lesdits moyens d'actualisation incluent une unité d'interclassement de messages (8a), une unité de commande de mémoire de messages (9) et ladite seconde mémoire (6b).

4. Récepteur selon la revendication 3, dans lequel, lors de la détermination par ladite unité d'interclassement de messages (8a) qu'un premier message contenant le train de caractères et de symboles spécifique a déjà été mémorisé dans ladite seconde mémoire (6b) et que le train de caractères et de symboles spécifique est contenu dans un second message nouvellemennt reçu, ladite unité de commande de mémoire de messages (9) est conçue pour effacer le premier message et amener ladite seconde mémoire (6b) à mémoriser le second message.

5. Récepteur selon la revendication 1, dans lequel lesdits moyens d'entrée incluent un commutateur de sélection d'item (14) destiné à fixer l'item individuel d'informations, une première mémoire (6a) destinée à mémoriser à la fois un item individuel d'informations préfixé et des informations indiquant si l'item d'informations à été sélectionné ou non en tant qu'item de réception souhaité par un étage de transmission dudit récepteur, une unité de notification/d'affichage (7) et une CPU (9) destinée à commander ladite première mémoire et ladite unité de notification/d'affichage ; lesdits moyens de mémorisation/d'affichage incluent une seconde mémoire (6b) destinée à mémoriser les informations transmises dans un message et associées à un item individuel d'informations sélectionné, ladite unité de notification/d'affichage (7), et ladite CPU (9) destinée à commander ladite seconde mémoire et ladite unité de notification/d'affichage ; et lesdits moyens d'actualisation incluent un premier étage d'interclassement de messages (8a), un second étage d'interclassement de messages (8b) destiné à recevoir les informations associées à l'item individuel d'informations sélectionné en provenance dudit premier étage d'interclassement de messages, à interclasser les informations par leur contenu mémorisé de ladite seconde mémoire afin de déterminer la présence/l'absence d'une variation du contenu des informations et à délivrer le résultat de la détermination auprès de ladite CPU (9) et de ladite seconde mémoire (6b).
